# EUROPÄISCHE PATENTSCHRIFT

(11) **EP 0 760 305 B1**
(45) Veröffentlichungstag und Bekanntmachung des Hinweises auf die Patenterteilung: **17.05.2000**
(21) Anmeldenummer: 96113704.9
(22) Anmeldetag: 27.08.1996
(51) Int. Cl.: B60K 7/00, B61F 3/16

(54) **Einzelradantrieb für ein elektrisch angetriebenes Fahrzeug**
Single wheel drive for an electrically driven vehicle
Propulsion de roue indépendante pour véhicule à propulsion électrique

(30) Priorität: 30.08.1995 DE 19531956
(43) Veröffentlichungstag der Anmeldung: 05.03.1997
(73) Patentinhaber: SIEMENS AKTIENGESELLSCHAFT, 80333 München (DE); ZF Friedrichshafen AG, 88046 Friedrichshafen (DE)
(72) Erfinder: Roth, Christian, Dipl.-Ing., 66914 Waldmohr (DE); Strehler, Richard, 83339 Chieming (DE)
(74) Vertreter: Zedlitz, Peter, Dipl.-Inf.

(56) Entgegenhaltungen:
- EP-A- 0 132 236
- DE-C- 4 407 714
- FR-A- 2 374 194
- US-A- 3 347 333
- US-A- 5 087 229
- SOVIET PATENT ABSTRACTS Section PQ, Week 9331 Derwent Publications Ltd., London, GB; Class Q21, AN 93-248575 XP002034441 & SU 1 751 012 A (RIGA SECT WAGONS CONSTR RES INST) , 30.Juli 1992

## Beschreibung

Die Erfindung betrifft einen Einzelradantrieb für ein elektrisch angetriebenes Fahrzeug, wobei das Antriebsaggregat abgefedert am Fahrwerk angeordnet ist und wobei der auf einer Hohlwelle sitzende Rotor des Motors über ein Planetengetriebe das Treibrad antreibt.

Ein Einzelradantrieb dieser Art ist aus der US-A-5 087 229 bekannt. Dieser Antrieb ist als Radnabenantrieb ausgeführt, bei dem der Motor im Bereich der Radnabe einer speziellen Treibradausbildung angeordnet und zweifach gegen Fahrwerksteile abgefedert ist. Zur Aufnahme eines Getriebegehäuses ist der Rotor des Motors becherförmig ausgebildet.

Gegenstand der EP-A-718 139, die als stand der Technik im Sinne des Artikels (54)3 EPÜ zu betrochten ist, ist ein Einzelradantrieb, bei dem ein Motor mit seinem Stator an einem ersten Fahrwerksteil befestigt ist und bei dem sich das erste Fahrwerksteil über eine Primärfederung an einem ungefederten zweiten Fahrwerksteil abstützt, auf dem das Einzelrad drehbar gelagert ist, wobei der Rotor des Motors sein Drehmoment über eine Kopplungseinrichtung überträgt, deren radiale Beweglichkeit größer ist als der Federweg der Primärfederung. Bei einem derartigen Einzelradantrieb, der insbesondere für elektrisch angetriebene Schienenfahrzeuge geeignet ist, ist der Anteil an ungefederten Massen gering. Bei diesem gegen zwei Fahrwerksteile abgefederten Radnabenantrieb ist für die Anordnung des Motors eine besondere Treibradkonstruktion vorgesehen. Der Motoraufbau bedingt eine relativ große axiale Baulänge des gesamten Antriebsaggregates mit separater Bremsscheibe und erfordert große Lager.

Bei Niederflurschienenfahrzeugen, wie sie die Stadtwerke in Wien einsetzen, ist ein Antrieb mit einem senkrecht stehenden Elektromotor und mit einem Kegelradgetriebe zur Treibradachse vorgesehen. Nachteilig dabei ist das hohe Gewicht eines solchen Antriebsaggregates und der durch das Kegelradgetriebe bedingte geringere Wirkungsgrad in der Kraftübertragung. Außerdem ist wegen der seitlichen Anbringung des Motors neben dem Treibrad eine besondere Ausgestaltung des Fahrzeug-Lichtraumprofiles erforderlich.

Aufgabe der Erfindung ist es, einen voll abgefederten Einzelradantrieb zu schaffen, der sich durch geringe Abmessungen und einen hohen Wirkungsgrad in der Kraftübertragung auszeichnet.

Erfindungsgemäß wird diese Aufgabe bei einem Einzelradantrieb der eingangs genannten Art dadurch gelöst, daß der Rotor des Motors über das Planetengetriebe eine durch die Hohlwelle geführte Antriebswelle antreibt, daß dem dem Treibrad des Fahrzeuges zugewandten Ende der Antriebswelle eine elastische Kupplung zugeordnet ist, wobei die elastische Kupplung das Drehmoment des Motors auf das Treibrad überträgt, und daß das Antriebsaggregat gegen ein Fahrwerksteil abgefedert gehalten ist.

Ein derartiger, insbesondere zum Antrieb von Schienenfahrzeugen, wie Niederflurstraßenbahnen, oder von Bussen geeigneter Einzelradantrieb bildet einen voll abgefederten Antrieb, der zwischen dem Treibrad des Fahrzeuges und der seitlichen Fahrzeugaußenbegrenzung angeordnet wird, wobei der Antrieb einem konventionell einfach ausgebildeten und gelagerten Treibrad vorgeordnet ist. Der Antrieb zeichnet sich dabei insbesondere durch seine geringe axiale Baulänge und sein relativ geringes Gewicht aus und ist im Lichtraumprofil des Fahrzeuges gut unterbringbar. Gegenüber Radnabenmotoren braucht das erfindungsgemäße Antriebsaggregat nur gegen ein Fahrwerksteil abgefedert gehalten zu werden.

In vorteilhafter Ausbildung der Erfindung ist die axiale Baulänge des aus Kupplung, Motor und Getriebe bestehenden erfindungsgemäßen Antriebsaggregates kleiner als der durch den Motor bestimmte Außendurchmesser des Antriebsaggregates. In vorteilhafter Auslegung liegt Verhältnis der axialen Baulänge des Motorblechpaketes zum Außendurchmesser des Motors in einem Bereich von 0,15 bis 0,3. Bei vorteilhaften Ausführungsformen liegt das Verhältnis der axialen Baulänge des Motorblechpaketes zum Außendurchmesser des Motors bei Werten von 0,16 bis 0,25.

Eine vorteilhafte Ausbildung des Antriebsaggregates bezüglich Motor- und Getriebegehäuse wird dadurch erreicht, daß ein dem Treibrad abgewandtes Motorlagerschild des Antriebsaggregates mit einem äußeren Abschlußdeckel das Getriebegehäuse bildet.

Zur Reduzierung der axialen Baulänge des Antriebsaggregates gemäß der Erfindung trägt bei, daß das Motorlagerschild derart profiliert ist, daß es unterhalb der Statorwicklung in den Motorraum eingezogen ist, derart, daß das Hohlrad des Planetengetriebes zumindest teilweise unterhalb der Statorwicklung angeordnet werden kann.

Eine weitere Reduzierung der axialen Baulänge wird dann erreicht, wenn ein dem Treibrad zugeordnetes Motorlagerschild derart profiliert ist, daß es unterhalb der Statorwicklung in den Motorraum eingezogen ist und daß unterhalb der Statorwicklung zwischen dem Motorlagerschild und dem Treibrad die elastische Kupplung angeordnet werden kann.

Eine weitere, die Baugröße reduzierende Ausbildung des Einzelradantriebes wird dadurch erreicht, daß zwischen dem Treibrad und dem Antriebsaggregat wenigstens ein Teil einer Bremsvorrichtung mit zugehöriger Bremsscheibe angeordnet ist.

Weitere Vorteile und Einzelheiten der Erfindung ergeben sich aus der nachfolgenden Beschreibung von Ausführungsbeispielen anhand der Zeichnung und in Verbindung mit den in den Patentansprüchen gekennzeichneten Merkmalen.

Es zeigen:

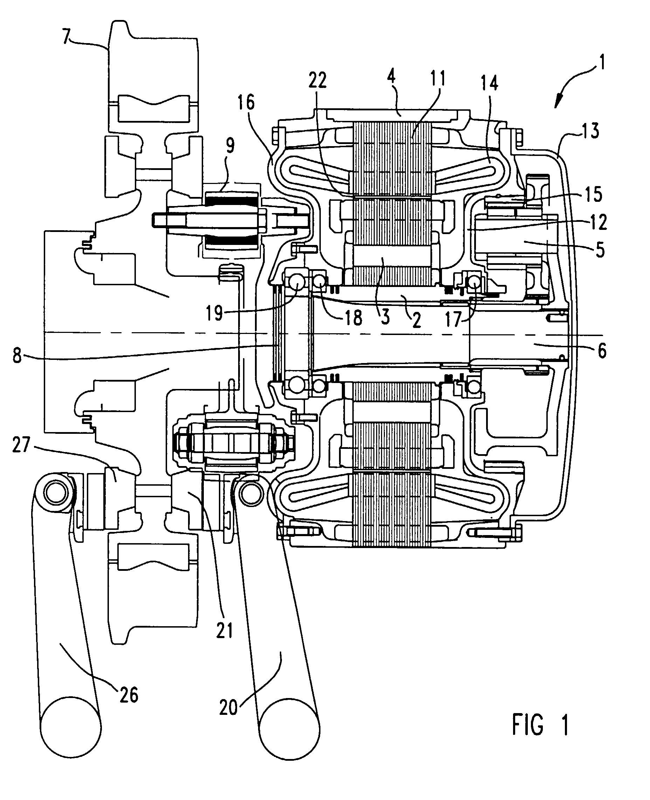

Figur 1 einen erfindungsgemäßen Einzelradantrieb eines Treibrades eines elektrischen Schienenfahrzeuges im Längsschnitt,
Figur 2 eine Ansicht eines Einzelradantriebes gemäß Figur 1, jedoch teilweise um 90° gedreht gezeichnet, mit der federnden Aufhängung des Antriebsaggregates gegen ein Fahrwerksteil,

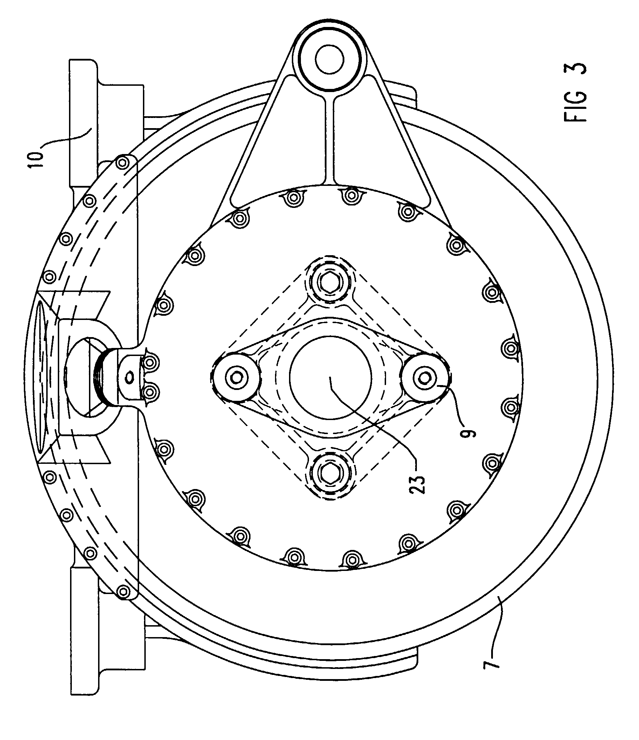

Figur 3 eine Seitenansicht zu Figur 2.

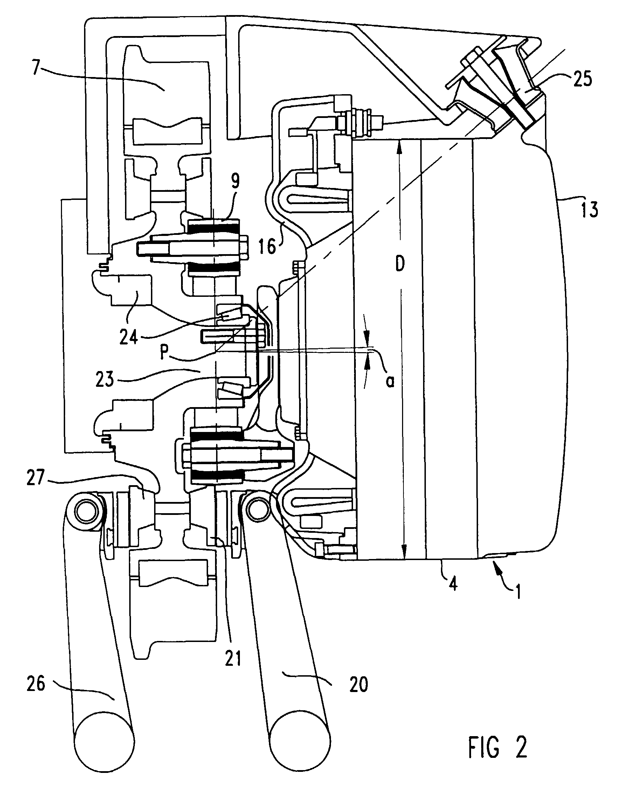

An dem in Figur 2 dargestellten Fahrwerksteil 10 eines Schienenfahrzeuges ist in an sich bekannter Anordnung ein Treibrad 7 über einen Achsstummel 23 und ein Radachslager 24 gelagert. Das das Treibrad 7 über eine elastische Kupplung 9 antreibende Antriebsaggregat 1 ist über eine Federung 25 gegen das Fahrwerksteil 10, im Ausführungsbeispiel ein Radträger, abgefedert gehalten. Aufgrund dieser Abfederung kann das Antriebsaggregat 1 um den Lagerpunkt P der Radachse 23 um einen begrenzten Winkel a pendeln. Zu beiden Seiten des Treibrades 7 sind Bremshebel 20, 26 und Bremsscheiben 21, 27 einer vorgesehenen Bremse gezeichnet, wobei die Anordnung der Bremsvorrichtung 20, 21 zwischen Treibrad 7 und Antriebsaggregat 1 aufgrund der profilierten Ausbildung des zugeordneten Motorlagerschildes 16 einen sehr kompakten Einzelradantrieb mit kurzer axialer Baulänge ermöglicht.

Das Antriebsaggregat zeichnet sich durch einen Elektromotor 4 von einer geringen axialen Baulänge aus. Dabei ist die axiale Baulänge des aus der Kupplung 9, dem Motor 4 und einem Getriebe 5 bestehenden Antriebsaggregates 1 kleiner als der durch den Motor 4 bestimmte Außendurchmesser D des Antriebsaggregates. In einer vorteilhaften Ausbildung liegt das Verhältnis der axialen Baulänge des Motorblechpaketes 11 zum Außendurchmesser des Motors 4 bei Werten zwischen etwa 0,15 und 0,3.

Der auf einer Hohlwelle 2 sitzende Rotor 3 des Motors 4 treibt über ein Planetengetriebe 5 eine durch die Hohlwelle geführte Antriebswelle 6 an. Dem Ende 8 der Antriebswelle 6, welches dem Treibrad 7 des Fahrzeuges zugewandt ist, ist eine an sich bekannte, elastische Kupplung 9 zugeordnet, welche die Kraftübertragung zwischen der Antriebswelle 6 und dem Treibrad 7 übernimmt. Eine Lagerung 17, 18 der Hohlwelle 2 bzw. des Rotors 3 des Motors 4 ist nach vorteilhafter Ausführung für den axial kurz gebauten Motor in den eingezogen ausgebildeten Bereichen der Motorlagerschilde 12, 16 vorgesehen. Des weiteren ist eine Lagerung 19 der Antriebswelle 6 im eingezogenen Bereich des treibradseitigen Motorlagerschildes 16 angeordnet.

Bei Schienenfahrzeugen, wie Eisenbahnfahrzeugen und Straßenbahnen, oder bei Bussen, ist bei der Anordnung und Ausgestaltung der Antriebe darauf zu achten, daß das Antriebsaggregat nicht über das Seitenprofil des Fahrzeuges hinausragt. Um das sogenannte Lichtraumprofil des Fahrzeuges einzuhalten, ist vorgesehen, daß der äußere Abschlußdeckel 13 des Antriebsaggregates 1 innerhalb des Fahrzeugprofiles liegt oder mit diesem deckungsgleich ist.

Zwischen der mit dem Motorgehäuse feststehenden Statorwicklung 14 und dem drehenden Rotor 3 befindet sich ein Luftspalt 22, wobei zur platzsparenden kurzen Motorbauweise das Hohlrad 15 des Planetengetriebes 5 so angeordnet wird, daß es sich zumindest teilweise unterhalb der Statorwicklung 14 befindet.

## Patentansprüche

1. Einzelradantrieb für ein elektrisch angetriebenes Fahrzeug, wobei das Antriebsaggregat (1) abgefedert am Fahrwerk (10) angeordnet ist und wobei der auf einer Hohlwelle (2) sitzende Rotor (3) des Motors (4) über ein Planetengetriebe (5) das Treibrad (7) antreibt, **dadurch gekennzeichnet,** daß der Rotor (3) des Motors (4) über das Planetengetriebe (5) eine durch die Hohlwelle (2) geführte Antriebswelle (6) antreibt, daß dem dem Treibrad (7) des Fahrzeuges zugewandten Ende (8) der Antriebswelle (6) eine elastische Kupplung (9) zugeordnet ist, wobei die elastische Kupplung (9) das Drehmoment des Motors (4) auf das Treibrad (7) überträgt, und daß das Antriebsaggregat (1) gegen ein Fahrwerksteil (10) abgefedert gehalten ist.

2. Einzelradantrieb nach Anspruch 1, **dadurch gekennzeichnet**, daß die axiale Baulänge des aus Kupplung (9), Motor (4) und Getriebe (5) bestehenden Antriebsaggregates (1) kleiner als der durch den Motor (4) bestimmte Außendurchmesser des Antriebsaggregates (1) ist.

3. Einzelradantrieb nach Anspruch 2, **dadurch gekennzeichnet,** daß die axiale Baulänge des Motorblechpaketes (11) zum Außendurchmesser des Motors (4) in einem Verhältnis von 0,15 bis 0,3 ausgelegt ist.

4. Einzelradantrieb nach einem der Ansprüche 1 bis 3, **dadurch gekennzeichnet,** daß ein dem Treibrad (7) abgewandtes Motorlagerschild (12) mit einem äußeren Abschlußdeckel (13) das Getriebegehäuse bildet.

5. Einzelradantrieb nach Anspruch 4, **dadurch gekennzeichnet,** daß der Abschlußdeckel (13) des Antriebsaggregates (1) innerhalb des Fahrzeugprofiles liegt oder mit diesem deckungsgleich ist.

6. Einzelradantrieb nach einem der Ansprüche 1 bis 5, **dadurch gekennzeichnet,** daß das Motorlagerschild (12) derart profiliert ist, daß es unterhalb der Statorwicklung (14) in den Motorraum eingezogen ist und daß das Hohlrad (15) des Planetengetriebes (5) zumindest teilweise unterhalb der Statorwicklung (14) angeordnet ist.

7. Einzelradantrieb nach einem der Ansprüche 1 bis 6, **dadurch gekennzeichnet,** daß ein dem Treibrad (7) zugeordnetes Motorlagerschild (16) derart profiliert ist, daß es unterhalb der Statorwicklung (14) in den Motorraum eingezogen ist und daß unterhalb der Statorwicklung (14) zwischen dem Motorlagerschild (16) und dem Treibrad (7) die elastische Kupplung (9) angeordnet ist.

8. Einzelradantrieb nach einem der Ansprüche 1 bis 7, **dadurch gekennzeichnet,** daß eine Lagerung (17, 18) der Hohlwelle (2) mit aufgesetztem Rotor (3) im eingezogenen Bereich der Motorlagerschilde (12, 16) vorgesehen ist.

9. Einzelradantrieb nach einem der Ansprüche 1 bis 8, **dadurch gekennzeichnet,** daß eine Lagerung (19) der Antriebswelle (6) im eingezogenen Bereich des treibradseitigen Motorlagerschildes (16) vorgesehen ist.

10. Einzelradantrieb nach einem der Ansprüche 1 bis 9, **dadurch gekennzeichnet,** daß zwischen dem Treibrad (7) und dem Antriebsaggregat (1) wenigstens ein Teil einer Bremsvorrichtung (20) mit zugehöriger Bremsscheibe (21) angeordnet ist.

## Claims

1. Single wheel drive for an electrically driven vehicle, wherein the drive unit (1) is arranged in a spring-suspended manner on the chassis (10) and wherein the rotor (3) of the motor (4) disposed on a hollow shaft (2) drives the driving wheel (7) by way of a planetary gearing (5), characterized in that the rotor (3) of the motor (4) drives by way of the planetary gearing (5) a drive shaft (6) guided through the hollow shaft (2), in that the end (8) of the drive shaft (6) facing the driving wheel (7) of the vehicle is allocated an elastic coupling (9), wherein the elastic coupling (9) transfers the torque of the motor (4) to the driving wheel (7), and in that the drive unit (1) is supported in a spring-suspended manner against a chassis part (10).

2. Single wheel drive according to claim 1, characterized in that the axial overall length of the drive unit (1) consisting of coupling (9), motor (4) and gear unit (5) is smaller than the outer diameter of the drive unit (1) determined by the motor (4).

3. Single wheel drive according to claim 2, characterized in that the axial overall length of the laminated motor core (11) is designed with respect to the outer diameter of the motor (4) in a ratio of 0.15 to 0.3.

4. Single wheel drive according to one of claims 1 to 3, characterized in that a motor bearing shield (12), facing away from the driving wheel (7), with an outer sealing cover (13) forms the gearbox.

5. Single wheel drive according to claim 4, characterized in that the sealing cover (13) of the drive unit (1) lies,within the vehicle profile or is coincident therewith.

6. Single wheel drive according to one of claims 1 to 5, characterized in that the motor bearing shield (12) is shaped in such a way that it is drawn into the engine compartment below the stator winding (14) and in that the hollow wheel (15) of the planetary gearing (5) is arranged at least partially below the stator winding (14).

7. Single wheel drive according to one of claims 1 to 6, characterized in that a motor bearing shield (16) allocated to the driving wheel (7) is shaped in such a way that it is drawn into the engine compartment below the stator winding (14), and in that below the stator winding (14) the elastic coupling (9) is arranged between the motor bearing shield (16) and the driving wheel (7).

8. Single wheel drive according to one of claims 1 to 7, characterized in that a bearing (17, 18) of the hollow shaft (2) with attached rotor (3) is provided in the drawn-in area of the motor bearing shields (12, 16).

9. Single wheel drive according to one of claims 1 to 8, characterized in that a bearing (19) of the drive shaft (6) is provided in the drawn-in area of the driving-wheel-side motor bearing shield (16).

10. Single wheel drive according to one of claims 1 to 9, characterized in that at least a part of a braking device (20) with associated brake disc (21) is arranged between the driving wheel (7) and the drive unit (1).

## Revendications

1. Propulsion de roue indépendante pour véhicule à propulsion électrique, le groupe (1) de propulsion étant monté à suspension sur le châssis (10) et le rotor (3) du moteur (4), calé sur un arbre (2) creux, entraînant la roue (7) motrice par l'intermédiaire d'un engrenage planétaire, caractérisée en ce que le rotor (3) du moteur (4) entraîne par l'intermédiaire d'un engrenage (5) planétaire, un arbre (6) d'entraînement passant dans l'arbre (2) creux, en ce qu'à l'extrémité (8) de l'arbre (6) d'entraînement, qui est tournée vers la roue (7) motrice du véhicule, est associé un embrayage (9) élastique, l'embrayage (9) élastique transmettant le couple de rotation du moteur (4) à la roue (7) motrice et en ce que le groupe (1) propulseur est maintenu avec suspension contre une partie (10) du châssis.

2. Propulsion de roue indépendante suivant la revendication 1, caractérisée en ce que la longueur axiale du groupe (1) propulseur constituée de l'embrayage (9) du moteur (4) et de l'engrenage (5), est plus petite que le diamètre extérieur du groupe (1) propulseur déterminé par le moteur (4).

3. Propulsion de roue indépendante suivant la revendication 2, caractérisée en ce que la longueur axiale du paquet (11) de tôles du moteur est dans un rapport avec le diamètre extérieur du moteur (4), de 0,15 à 0,3.

4. Propulsion de roue indépendante suivant l'une des revendications 1 à 3, caractérisée en ce qu'un palier (12) du moteur éloigné de la roue (7) motrice forme, avec un capot (13) extérieur de fermeture, le carter de l'engrenage.

5. Propulsion de roue indépendante suivant la revendication 4, caractérisée en ce que le capot (13) de fermeture du groupe (1) propulseur se trouve dans le profil de véhicule ou coïncide avec celui-ci.

6. Propulsion de roue indépendante suivant l'une des revendications 1 à 5, caractérisée en ce que le palier (12) du moteur est profilé de manière à être rentré sous le bobinage (14) statorique, dans le compartiment moteur et en ce que la roue (15) à denture intérieure de l'engrenage (5) planétaire est disposée au moins en partie en-dessous de l'enroulement (14) statorique.

7. Propulsion de roue indépendante suivant l'une des revendications 1 à 6, caractérisée en ce qu'un palier (16) de moteur, associé à la roue (7) motrice, est profilé de manière à entrer en-dessous de l'enroulement (14) statorique dans le compartiment moteur, et en ce qu'en-dessous de l'enroulement (14) statorique, il est prévu entre le palier (16) du moteur et la roue (7) motrice, l'embrayage (9) élastique.

8. Propulsion de roue indépendante suivant l'une des revendications 1 à 7, caractérisée en ce qu'il est prévu un palier (17, 18) de l'arbre (2) creux, sur lequel est enfilé le rotor (3), dans la région rentrée des paliers (12, 16) du moteur.

9. Propulsion de roue indépendante suivant l'une des revendications 1 à 8, caractérisée en ce qu'il est prévu un palier (19) de l'arbre (6) d'entraînement dans la région rentrée du palier (16) du moteur se trouvant du côté de la roue motrice.

10. Propulsion de roue indépendante suivant l'une des revendications 1 à 9, caractérisée en ce qu'il est monté entre la roue (7) motrice et le groupe (1) propulseur, au moins une partie d'un dispositif (20) de frein, ayant un disque (21) de frein qui en fait partie.
